# EUROPÄISCHE PATENTSCHRIFT

(11) **EP 0 599 103 B1**
(45) Veröffentlichungstag und Bekanntmachung des Hinweises auf die Patenterteilung: **08.10.1997**
(21) Anmeldenummer: 93117782.8
(22) Anmeldetag: 03.11.1993
(51) Int. Cl.: F24C 15/32, F16L 41/00

(54) **Wärmetauscher mit Flammbeheizung und Verfahren zu dessen Herstellung**
Heat exchanger with heating by flame and and method for manufacturing same
Echangeur de chaleur avec un chauffage à flammes et son procédé de fabrication

(30) Priorität: 26.11.1992 DE 4239689
(43) Veröffentlichungstag der Anmeldung: 01.06.1994
(73) Patentinhaber: Wiesheu-Wiwa GmbH, D-71563 Affalterbach (DE)
(72) Erfinder: Teuber, Josef, D-71576 Burgstetten (DE)
(74) Vertreter: Kastner, Hermann, Dipl.-Ing. Patentanwalt

(56) Entgegenhaltungen:
- DE-A- 2 323 951
- DE-A- 3 604 921
- US-A- 2 963 783

## Beschreibung

Geräte zum Garen von Nahrungsmitteln und dergleichen werden auf unterschiedliche Art beheizt. Neben der Elektrobeheizung wird häufig auch die Flammbeheizung mit gasförmigen oder flüssigen Brennstoffen eingesetzt. Da das Gargut in dem Ofenraum dieser Geräte nicht unmittelbar mit den Heizgasen der Flammheizung in Berührung kommen darf, ist meist ein Wärmetauscher vorhanden, der beide Bereiche voneinander trennt. Das gilt insbesondere für diejenigen Geräte, in denen ein Gebläse die von der Flammbeheizung erhitzte Luft im Ofenraum umwälzt.

Bei dem bisher bekannten Wärmetauscher mit Flammbeheizung ist unterhalb des Wärmetauschers ein Brenner für die gasförmigen oder flüssigen Brennstoffe vorhanden. Der Brennraum ist von einer Leitvorrichtung für die Rauchgase umgeben, in der mehrere Durchgangsöffnungen vorhanden sind. An diese Durchgangsöffnungen sind Wärmetauscherrohre angeschlossen, die sich durch den Ofenraum hindurcherstrecken. An ihrem oberen Ende münden die Wärmetauscherrohre in eine Abgassammelkammer. Die Wärmetauscherrohre erstrecken sich durch die zugeordneten Durchgangsöffnungen der Abgassammelkammer meist frei hindurch, um Wärmespannungen zu vermeiden. An die Abgassammelkammer schließt ein Abgaskamin an, der die Abgase aus dem Wärmetauscher und insbesondere aus dem Gargerät hinausleitet.

Die Wärmetauscherrohre sind am unteren Ende mit der Leitvorrichtung gasdicht verbunden, damit die Heizgase nicht in den Ofenraum eindringen können. Da sowohl die Leitvorrichtung wie auch die Wärmetauscherrohre im allgemeinen als Metallblechteile ausgebildet sind, wird die gasdichte Verbindung beider Teile durch eine umlaufende Schweißnaht erzeugt. Da die Regelung der Wärmezufuhr häufig nicht analog sondern digital erfolgt, wird der Wärmetauscher nicht stetig sondern im Intervallbetrieb beheizt. Dadurch unterliegen sowohl die Leitvorrichtung wie auch die daran anschließenden Wärmetauscherrohre häufigen Temperaturschwankungen. Diese Temperaturschwankungen, insbesondere der Wärmetauscherrohre, werden noch dadurch verschlimmert, daß in den Ofenraum häufig Wasser eingespritzt wird, um die Ofenathmosphäre auf einem bestimmten höheren Feuchtigkeitsgehalt zu halten. Soweit ein Umwälzgebläse für die Heißluft vorhanden ist, wird dieses meist auch für die Zerstäubung und Verteilung des zugeführten Wassers benutzt. Beim Auftreffen der Wassertröpfchen auf die Schweißnähte werden diese immer wieder abgeschreckt, was zusätzliche Wärmespannungen in dem Werkstoff der Schweißnaht und der anschließenden Teile hervorruft. Das führt häufig zu Rissen der Schweißnaht der Wärmetauscherrohre. Diese Risse werden während des Betriebes durch vorübergehend oder dauernd eintretende Verwerfungen der anschließenden Teile vergrößert. Dadurch können die Heizgase in unkontrollierter Weise in den Ofenraum eintreten. Da das Auftreten der Nahtrisse im allgemeinen ein schleichender Vorgang ist, bleibt ihr Auftreten oft längere Zeit unbemerkt.

In der DE-A-2 323 951 ist ein Verfahren zum Verbinden eines Deckels mit einem ihn durchsetzenden Rohrstück bei Schalldämpfern beschrieben.

Der Erfindung liegt die Aufgabe zugrunde, insbesondere für Gargeräte, einen Wärmetauscher mit Flammbeheizung zu schaffen, bei dem die Verbindung zwischen der Leiteinrichtung für die Heizgase und den Wärmetauscherrohren dauerhafter als bei den herkömmlichen Wärmetauschern ist.

Diese Aufgabe wird durch einen Wärmetauscher mit den im Anspruch 1 angegebenen Merkmalen gelöst. Dadurch, daß die Leitvorrichtung und die Wärmetauscherrohre durch eine mehrfache Bördelung miteinander verbunden werden, entfallen die Schweißnähte im Bereich der Verbindungsstelle. Die aufgrund der plastischen Verformung der Teile im Bereich der Verbindungsstelle anfänglich vorhandenen inneren Spannungen werden aufgrund der Wärmeeinwirkung der Flammheizung sehr rasch abgebaut, wonach die Verbindungsstellen praktisch spannungsfrei sind. Soweit durch den Intervallbetrieb und/oder durch das Einspritzen von Wasser in den Ofenraum Temperaturunterschiede der einzelnen Lagen der miteinander verbundenen Teile auftreten, werden sie von diesen Teilen elastisch aufgenommen und verschwinden dann wieder. Solche Verbindungsstellen haben daher eine wesentlich höhere Haltbarkeit als Schweißverbindungen, bei denen die Werkstoffe der aneinander angeschlossenen Teile gar nicht die Möglichkeit haben, sich aufeinander einzustellen und innere Spannungen abzubauen.

Der Erfindung liegt außerdem die Aufgabe zugrunde, ein Verfahren zum Herstellen eines Wärmetauschers mit den zuvor angegebenen Eigenschaften anzugeben. Diese Aufgabe wird durch ein Herstellungsverfahren mit den im Anspruch 2 angegebenen Verfahrensschritten gelöst.

Im folgenden wird die Erfindung anhand eines in der Zeichnung dargestellten Ausführungsbeispieles eines Wärmetauschers näher erläutert. Es zeigen:

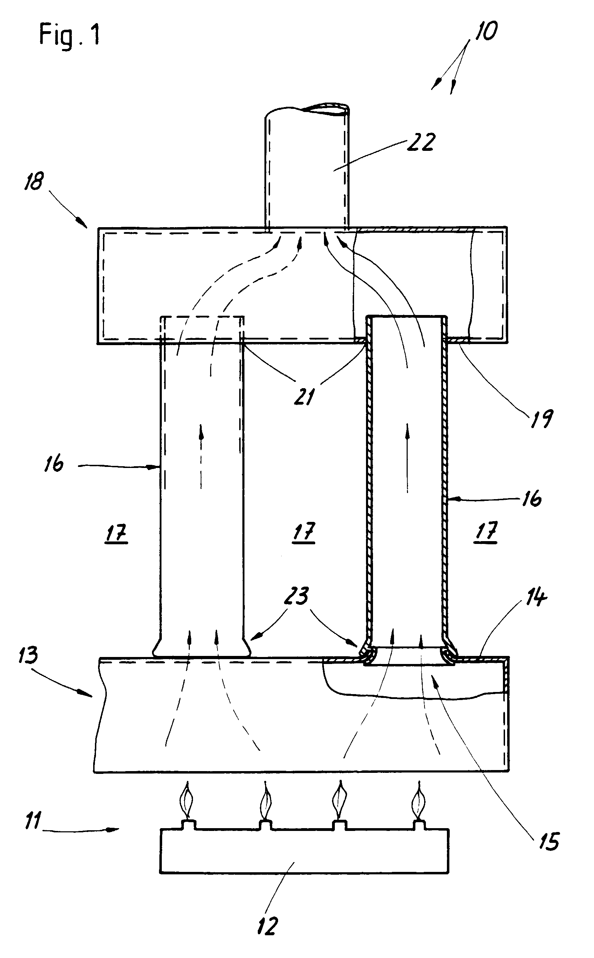

- Fig. 1: eine teilweise geschnitten dargestellte Seitenansicht eines Wärmetauschers mit Flammbeheizung;
- Fig. 2: einen ausschnittweise dargestellten Vertikalschnitt eines Wärmetauscherrohres für den Wärmetauscher nach Fig. 1, in einem Zwischenstadium seiner Verarbeitung;
- Fig. 3: einen ausschnittweise dargestellten Vertikalschnitt einer Leitvorrichtung des Wärmetauschers nach Fig. 1;
- Fig. 4: einen ausschnittweise dargestellten Vertikalschnitt der beiden Teile nach Fig. 2 und Fig. 3 in einem Zwischenstadium ihrer Verbindung;
- Fig. 5: einen ausschnittweise dargestellten Vertikalschnitt der beiden Teile nach Fig. 4 im Endstadium ihrer Verbindung.

Der Wärmetauscher 10, wie er vor allem für Gargeräte eingesetzt wird, ist mit einer Flammbeheizung 11 ausgerüstet. Diese Flammbeheizung 11 weist einen oder mehrere Brenner 12 für gasförmige oder flüssige Brennstoffe auf.

Der Brennraum, in dem der Brenner 12 angeordnet ist, ist seitlich und vor allem im oberen Bereich von einer Leitvorrichtung 13 umgeben. Diese Leitvorrichtung 13 ist als Blechteil ausgebildet. Dazu werden in der Regel korrosionsarme Stahlbleche verwendet. Die Leitvorrichtung 13 weist an ihrem oberen Wandabschnitt oder in ihrer Decke 14 mehrere Durchgangsöffnungen 15 auf. An jede dieser Durchgangsöffnungen schließt ein Wärmetauscherrohr 16 an, das am unteren Ende mit der Leitvorrichtung 13 gasdicht verbunden ist. Der die Wärmetauscherrohre 16 umgebende Raum bildet den Ofenraum 17 des betreffenden Gargerätes. Die Wärmetauscherrohre 16 sind ebenfalls aus korrosionsarmem Stahl hergestellt.

Im oberen Bereich des Ofenraumes 17 ist eine Abgassammelkammer 18 angeordnet, die in ihrem dem Ofenraum 17 zugekehrten Boden 19 eine Reihe von Durchgangslöchern 21 aufweist, die der Anzahl, der Abmessung und der Anordnung nach auf die Wärmetauscherrohre 16 abgestimmt sind. Die lichte Weite dieser Durchgangslöcher 21 ist geringfügig größer als der Außendurchmesser der Wärmetauscherrohre 16, so daß diese sich frei durch die Durchgangslöcher 21 bis in die Abgassammelkammer 18 hineinerstrecken können. Auf der Oberseite der Abgassammelkammer 18 ist ein rohrförmiger Abgaskamin 22 angeordnet, der die Abgase aus dem Gargerät heraus ins Freie leitet.

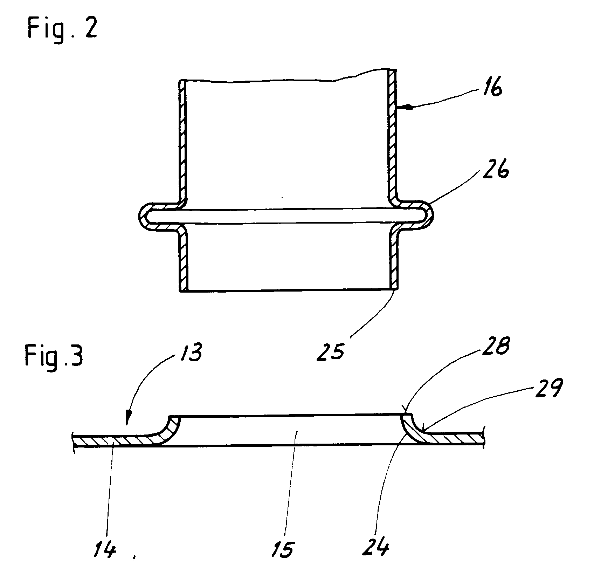

Die Leiteinrichtung 13 und die Wärmetauscherrohre 16 sind mittels einer Bördelverbindung 23 miteinander verbunden. Dafür wird in der Decke 14 der Leiteinrichtung 13 der Randbereich 24 der Durchgangsöffnungen 15 düsenförmig ausgebildet. An den Wärmetauscherrohren 16 wird in ihrem unteren Endbereich in einer bestimmten Entfernung vom unteren Rohrende 25 eine ringförmig umlaufende und nach außen ragende Falte 26 angeformt (Fig. 2).

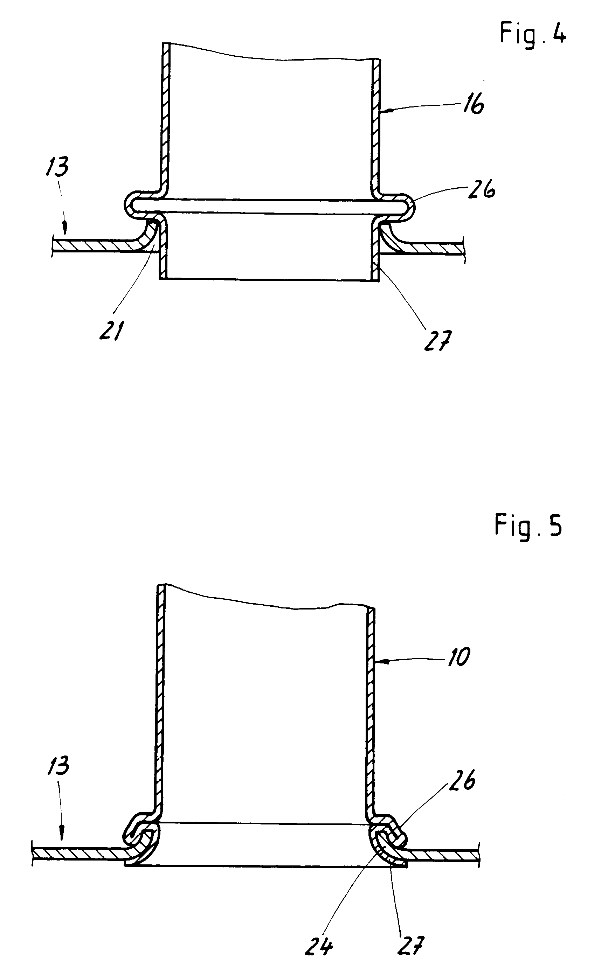

Im weiteren Verlauf der Herstellung des Wärmetauschers 10 werden die Wärmetauscherrohre 16 mit ihrem an die Falte 26 anschließenden Endabschnitt 27 in je eines der Durchgangslöcher 21 der Leiteinrichtung 13 eingesteckt, bis die Falte 26 auf der Stirnseite 28 (Fig. 3) des düsenförmigen Randbereiches aufsitzt (Fig. 4).

Nach dieser losen Vereinigung der Wärmetauscherrohre 16 mit der Leitvorrichtung 13 wird die umlaufende Falte 26 jedes Wärmetauscherrohres 16 über die Stirnseite 28 des düsenförmigen Randbereiches 24 hinweg abwärts verformt, bis sie an der außengelegenen Hohlkehle 29 (Fig. 3) anliegt und sich daran anschmiegt. Anschließend wird der über die Stirnseite 28 des düsenförmigen Randbereiches 24 nach unten überstehende Endabschnitt 27 (Fig. 4) aufgeweitet und verformt, bis er an der erhabenen Innenseite des düsenförmigen Randbereiches 24 an diesem anliegt und sich daran dicht anschmiegt (Fig. 5). Damit ist die dauerhaft gasdichte Verbindung der Wärmetauscherrohre 16 mit der Leiteinrichtung 13 hergestellt.

### Bezugszeichenliste

- 10: Wärmetauscher
- 11: Flammbeheizung
- 12: Brenner
- 13: Leitvorrichtung
- 14: Decke
- 15: Durchgangsöffnungen
- 16: Wärmetauscherrohre
- 17: Ofenraum
- 18: Abgassammelkammer
- 19: Boden
- 21: Durchgangslöcher
- 22: Abgaskamin
- 23: Bördelverindung
- 24: Randbereich
- 25: Rohrende
- 26: Falte
- 27: Endabschnitt
- 28: Stirnseite
- 29: Hohlkehle

## Patentansprüche

1. Wärmetauscher mit Flammbeheizung, mit den Merkmalen:
- es ist ein Brenner (12) für gasförmige oder flüssige Brennstoffe vorhanden,
- oberhalb des Brenners (12) ist eine Leitvorrichtung (13) für die Heizgase angeordnet,
-- die wenigstens eine Durchgangsöffnung (15) für die Heizgase aufweist,
- eine Abgassammelkammer (18) ist in einem bestimmten Abstand oberhalb der Leitvorrichtung (13) angeordnet,
-- die die gleiche Anzahl von Durchgangsöffnungen (21) für die Abgase wie die Leitvorrichtung (13) aufweist,
- in dem als Ofenraum (17) dienenden Zwischenraum zwischen der Leitvorrichtung (13) und der Abgassammelkammer (18) ist mindestens ein Wärmetauscherrohr (16) angeordnet,
-- das an seinem unteren Ende im Bereich einer der Durchgangsöffnungen (15) der Leitvorrichtung (13) mit dieser gasdicht verbunden ist und
-- das im Bereich seines oberen Endes durch eine der Durchgangsöffnungen (21) der Abgassammelkammer (18) frei hindurchtritt,
- an die Abgassammelkammer (18) ist ein Abgaskamin (22) angeschlossen,
**gekennzeichnet** durch die Merkmale:
- der Randbereich (24) jeder Durchgangsöffnung (15) der Leitvorrichtung (13) ist düsenförmig ausgebildet, der zum Ofenraum (18) hin ausgerichtet ist,
- am Wärmetauscherrohr (16) ist in einer bestimmten Entfernung vom unteren Ende (25) eine ringförmig umlaufende Falte (26) angeformt,
- die Falte (26) ist bis zur Anlage an der Hohlkehle (29) des düsenförmigen Randbereiches (24) in diese hineinverformt,
- der an die umlaufende Falte (26) anschließende Endabschnitt (27) des Wärmetauscherrohres (16) ist bis zur Anlage an der erhabenen Unterseite des düsenförmigen Randbereiches (24) an diesen heranverformt.

2. Verfahren zum Herstellen einer gasdichten Verbindung zwischen Wärmetauscherrohren und einem Trägerteil mit Durchgangsöffnungen für die Wärmetauscherrohre eines Wärmetauschers mit Flammbeheizung nach Patentanspruch 1, **gekennzeichnet** durch die Verfahrensschritte:
- am Trägerteil wird der Randbereich jeder Durchgangsöffnung düsenförmig nach einer Seite hin verformt,
- am unteren Endabschnitt der Wärmetauscherrohre wird in einer bestimmten Entfernung vom Rohrende eine ringförmig umlaufende, nach außen ragende Falte erzeugt,
- die Wärmetauscherrohre werden mit dem Endabschnitt in der Nachbarschaft ihrer Falte in je eine der Durchgangsöffnungen des Trägerteils eingesteckt, bis die Falte auf dem düsenförmigen Randbereich aufsitzt,
- die ringförmig umlaufende Falte wird über die Stirnseite des düsenförmigen Randbereiches hinweg in die Hohlkehle des düsenförmigen Randbereiches bis zur Anlage daran hineinverformt,
- der über die Stirnseite des düsenförmigen Randbereiches nach unten überstehende Endabschnitt des Wärmetauscherrohres wird an die erhabene Unterseite des düsenförmigen Randbereiches bis zur Anlage daran heranverformt.

## Claims

1. A flame-heated heat exchanger having the following features:
- a burner (12) for gaseous or liquid fuels is provided,
- a conducting arrangement (13) for the heating gases is arranged above the burner (12),
-- and has at least one passage opening (15) for the heating gases,
- a waste-gas collecting chamber (18) is arranged at a certain distance above the conducting arrangement (13),
-- and has the same number of passage openings (21) for the waste gases as the conducting arrangement (13),
- in the space, serving as a furnace chamber (17), provided between the conducting arrangement (13) and the waste-gas collecting chamber (18) is arranged at least one heat-exchanging pipe (16),
-- the lower end of which is connected in a gas-tight manner to the conducting arrangement (13) in the region of one of the passage openings (15) thereof,
-- and which, in the region of its upper end, extends freely through one of the passage openings (21 ) of the waste-gas collecting chamber (18),
- a flue (22) is connected to the waste-gas collecting chamber (18),
characterised by the following features:
- the edge region (24) of each passage opening (15) of the conducting arrangement (13) is nozzle-shaped and points towards the furnace chamber (18) [sic - 17],
- an annular fold (26) is formed on the heat-exchanging pipe (16) at a certain distance from the lower end (25) thereof,
- the fold (26) is bent into the concave profile (29) of the nozzle-shaped edge region (24) until coming to rest thereagainst,
- the end portion (27) of the heat-exchanging pipe (16) is bent towards the raised underside of the nozzle-shaped edge region (24) until coming to rest thereagainst, the said end portion (27) adjoining the circumferential fold (26).

2. A method of producing a gas-tight connection between heat-exchanging pipes and a carrier member having passage openings for the heat-exchanging pipes of a flame-heated heat exchanger according to claim 1, characterised by the following steps:
- the edge region of each passage opening in the carrier member is bent towards one side in the shape of a nozzle,
- an annular, outwardly projecting fold is formed on the lower end portion of the heat-exchanging pipes at a certain distance from the pipe end,
- the heat-exchanging pipes are each inserted, by means of their end portion adjacent to the fold, into one of the passage openings of the carrier member until the fold rests on the nozzle-shaped edge region,
- the annular fold is bent over the end surface of the nozzle-shaped edge region into the concave profile of the nozzle-shaped edge region until coming to rest thereagainst,
- the end portion of the heat-exchanging pipe is bent towards the raised underside of the nozzle-shaped edge region until coming to rest thereagainst, the said end portion projecting downwards beyond the end surface of the nozzle-shaped edge region.

## Revendications

1. Echangeur de chaleur avec chauffage à flamme, présentant les particularités suivantes :
- il y a un brûleur (12) pour des combustibles sous forme gazeuse ou liquides,
- au-dessus du brûleur (12) on a disposé un dispositif de guidage (13) pour les gaz brûlants ,
-- qui présente au moins une ouverture de passage (15) pour les gaz brûlants,
- une chambre collectrice des gaz d'échappement (18) est disposée à une distance déterminée au dessus du dispositif de guidage (13),
-- qui présente le même nombre d'ouvertures de passage (21) pour les gaz d'échappement que le dispositif de guidage (13),
- on a disposé dans la chambre intermédiaire qui sert de four (17), entre le dispositif de guidage (13) et la chambre (18), qui collecte les gaz d'échappement, au moins un tube d'échangeur de chaleur (16),
-- qui est reliée à son extrémité inférieure dans la zone de l'une des ouvertures de passage (15) du dispositif de guidage (13) avec celui-ci et
-- qui dans la zone de son extrémité supérieure passe librement à travers l'une des ouvertures de passage (21) de la chambre collectrice des gaz d'échappement (18)
- à la chambre collectrice des gaz d'échappement (18) est raccordée une cheminée (22) pour les gaz d'échappement
caractérisé par les particularités suivantes :
- la zone de bordure (24) de chaque ouverture de passage (15) du dispositif de guidage (13) est constituée en forme de buse, qui est orientée en direction du four (18),
- sur le tube d'échangeur de chaleur (16) on forme à une distance déterminée de l'extrémité inférieure (25) une bosse (26) qui fait tout le tour, de forme annulaire,
- la bosse (26) est déformée en l'enfonçant dans la zone de bordure (24) en forme de buse jusqu'à ce qu'elle vienne en appui sur la gorge creuse (29) de celle-ci,
- la section terminale (27), qui se raccorde à la bosse (26) qui fait tout le tour du tube (16) de l'échangeur de chaleur est déformée pour s'adapter à la zone de bordure (24) en forme de buse jusqu'à ce qu'elle vienne en appui sur la face inférieure en relief de celle-ci.

2. Procédé pour fabriquer une liaison étanche aux gaz entre des tubes d'échangeur de chaleur et un support avec des ouvertures de passage pour les tubes d'un échangeur de chaleur avec chauffage à la flamme, selon la revendication 1, caractérisé par les étapes suivantes :
- sur le support on déforme la zone de bordure de chaque ouverture de passage en forme de buse sur un côté,
- on réalise sur la section terminale inférieure des tubes d'échangeur de chaleur, à une distance déterminée de l'extrémité des tubes, une bosse qui fait saillie vers l'extérieur et qui fait tout le tour sous une forme annulaire,
- les tubes de l'échangeur de chaleur sont enfoncés par leur section terminale au voisinage de leur bosse dans respectivement l'une des ouvertures de passage du support, jusqu'à ce que la bosse repose sur la zone de bordure en forme de buse,
- les bosses qui font le tour, de forme annulaire, sont déformées sur la face frontale de la zone de bordure en forme de buse en s'enfonçant dans la gorge creuse de la zone de bordure en forme de buse jusqu'à ce qu'elles viennent en appui sur celle-ci,
- la section terminale, qui surplombe la face frontale de la zone de bordure en forme de buse vers le bas du tube d'échangeur de chaleur est déformée sur la face inférieure en relief de la zone de bordure en forme de buse jusqu'à ce qu'elle vienne en appui sur celle-ci.
